# EUROPEAN PATENT APPLICATION

(11) **EP 2 192 157 A1**
(43) Date of publication of application: **02.06.2010**
(21) Application number: 09176077.7
(22) Date of filing: 16.11.2009
(51) Int. Cl.: C08L 83/06, C08K 5/3412

(54) **A composition used to prepare silicone elastomer and the synthesis and use of a silicone elastomer**

(30) Priority: 28.11.2008 CN 200810203558
(71) Applicant: Henkel AG & Co. KGaA, 40589 Düsseldorf (DE)
(72) Inventor: Zhang, Yirong, 201324, Shanghai (CN); Zhang, Yon, 201324, Shanghai (CN); Zhang, Liwei, 201203, Shanghai (CN)

(57) **Abstract**

This invention disclosed a composition used to prepare silicone elastomer, wherein it includes (1) a component A comprising polymer A, the homo-polymer polymerized from one kind of monomer described in Formula 1 or an irregular, alternant, block or graft copolymer polymerized from several kinds of monomers described in Formula 1 and its terminal groups are shown in Formula 2; (2) component B containing a compound having at least two aziridine ring described in Formula 3, wherein the molar ratio of carboxyl group in polymer A to aziridine ring in component B is between 1:0.2 and 1:10. Furthermore, this invention disclosed the procedure of preparing silicone elastomer from the composition as well as a kind of silicone elastomer with its applications.

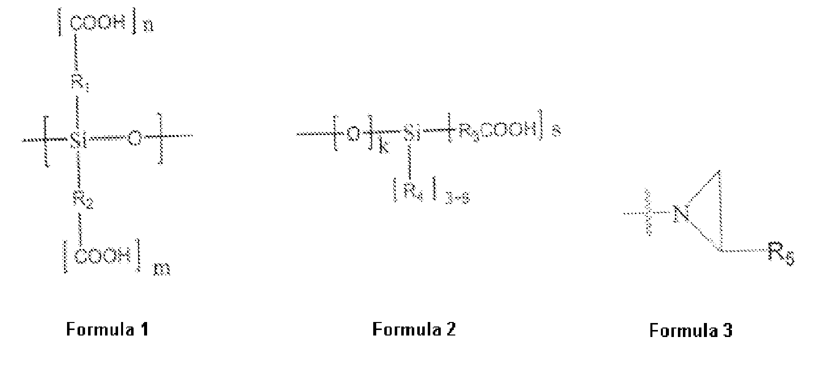

## Description

### Technical Field

This invention is related to a composition used to prepare silicone elastomer and the synthesis and application of a silicone elastomer.

### Background Technology

The traditional crosslinking approach of organic-silicon includes acid release type, alcohol release type, oxime release type, acetone release type, hydrosilation type and so on. The crosslinking approach of acid release type, alcohol release type, oxime release type and acetone release type will release Volatile Organic Compound (VOC) during the crosslinking reactions. While hydrosilation type needs to add proper catalyst (Karstedt, Speier's catalyst) which is prone to get poisoning and expensive and besides, Silicon Hydrogen Compound is not stable and likely to release H₂ which is prone to burn and blast. Since the environment problem is paid more and more attention in the world, people are looking for new crosslinking approach of organic-silicon which will not release VOC during reactions and not need to add heavy metal catalyst.

Furthermore, the crosslinking reactions progress from surface to the inner by steps in known condensation polymerization crosslinking approach of organic-silicons and therefore it costs much time to solidify and it is difficult to crosslink completely.

### Summary of the Invention

The technical problem of this invention intends to improve the known crosslinking approach of organic-silicon which is prone to release VOC or needs to add heavy metal catalyst; additionally the present crosslinking approach shall be improved which takes reactions from surface to inner and will not crosslink completely. This invention provides a composition to prepare a silicone elastomer with excellent performance and also to improve a silicone elastomer as well as its preparation and applications.

The aim of the invention is achieved by providing a composition according to the claim 1. The composition used to prepare silicone elastomer comprises a component A containing a polymer A, which is a homo-polymer polymerized from one kind of monomer as described in Formula 1 or a irregular, alternant, block or graft copolymer polymerized from several kinds of monomers as described in Formula 1 ; containing terminal groups shown in Formula 2. Preferably the average weight molecular weight (M_{w}) of polymer A could be from 500 to 200000 g/mol, more preferably 800 to 50000 g/mol and most preferred from 1000 to 20000 g/mol. The Distribution Index of molecular weight of polymer A could be 1 to3.

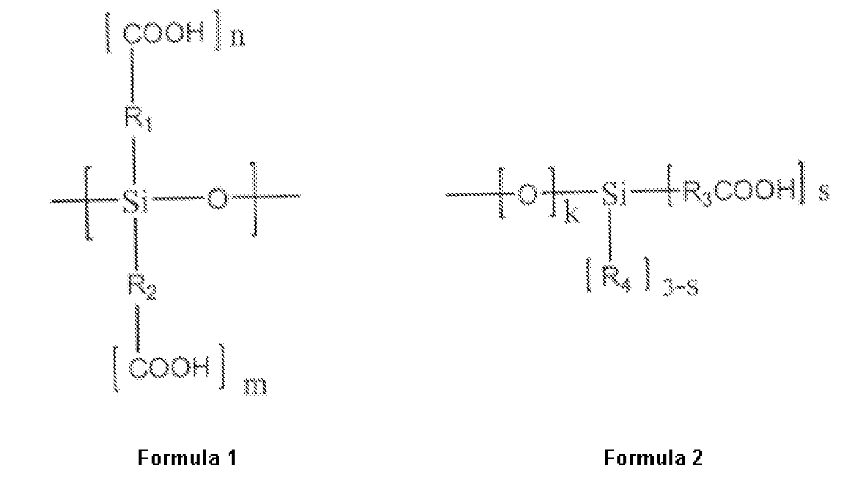

In the Formulas n and m are 0 or 1 independently; s is 0, 1, 2 or 3 and s+m+n>=2.

When the terminal group described in Formula 2 is directly attached to a Si- atom of Formula 1, k is equal to 1; when the terminal group described in Formula 2 is attached to an O- atom in Formula 1, k is equal to 0.

When n and m are equal to 1, R₁, R₂ or R₃ are independently from each other linear alkylene (C₁-C₂₀), cylcoalkylene (C₃-C₂₀), arylene (C₆-C₂₀), -NH-, -CONH-, -COO- or any discretional combination of fore-mentioned groups; preferably the groups are linear alkylene (C₁-C₁₂), cylcoalkylene (C₃-C₁₂), arylene (C₆-C₁₂), arylalkyl (C₇-C₂₀), -NHR'-, -CONHR'-, -R'CONH-, -COOR'- or-R'COO-, wherein R' is a linear alkylene (C₁-C₂₀) group; more preferred the groups are selected from linear alkylene (C₁-C₆), cylcoalkylene (C₃-C₆), arylene (C₆-C₁₀), arylalkyl (C₇-C₁₂), -NHR'-, -CONHR'-, -R'CONH-, -COOR'- or -R'COO-, wherein R' is a linear alkylene (C₁-C₁₂) group.

When n and m are equal to 0, R₁, R₂ or R₄ are independently H, alkyl (C₁-C₂₀), cycloalkyl group (C₃-C₂₀), arylene (C₆-C₂₀), alkene (C₂-C₁₂), acyloxy or any discretional combination of fore-mentioned groups; preferably alkyl (C₁-C₁₂), cycloalkyl (C₃-C₁₂), aryl (C₆-C₁₂), alkene (C₂-C₆), arylalkyl (C₇-C₂₀), alkylaryl (C₇-C₂₀), acyloxy (C₂-C₁₂) group.

The polymer A of this invention is especially selected from carboxyl propanamidepropyl endcapped polydimethylsiloxane, carboxyl propanamidepropyl endcapped polymethylphenylsiloxane, carboxyl acrylamidepropyl endcapped polydimethylsiloxane, carboxyl benzamidepropyl endcapped polydimethylsiloxane or carboxyl benzamidepropyl endcapped polymethylphenylsiloxane.

Polymer A in this invention is commercially available in the market or prepared based on a process as disclosed in US Patent 3956353 and literature 'Dunming Zhang, Weilong Yan, The preparation of silicone, Organic-Silicon Material and Application, 1999, 13(6):7-10 '.

Component B shall contain at least one compund with at least two aziridine rings as described in Formula 3 as cross-linking agent or chain extender, 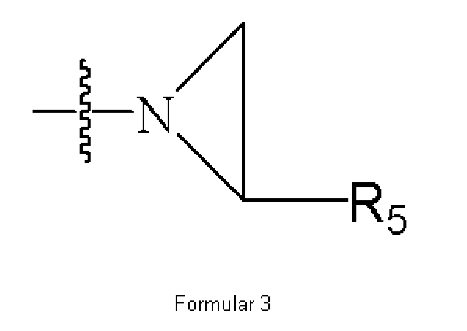 wherein, R₅ is H, alkyl (C₁-C₂₀), cycloalkyl group (C₃-C₂₀), aryl (C₆-C₂₀), alkene (C₂-C₁₂) group or a discretional combination of the fore-mentioned groups; preferably alkyl (C₁-C₁₂), cycloparaffin group (C₃-C₁₂), aryl (C₆-C₁₂), alkene (C₂-C₆), alkylaryl (C₇-C₂₀) or arylalkyl (C₇-C₂₀) group. Most preferred component B shall include an aziridine ring-contained organic compound as described in Formula 4, 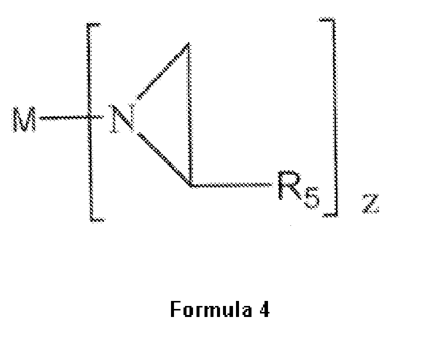 wherein, z could be a number from 2 to 20 or preferably a number from 2 to 10; the description of R₅ is the same as mentioned above.

M is selected from alkyl (C₁-C₂₀), cycloalkyl (C₄-C₂₀) or their combination, the combination of alkyl (C₁-C₂₀) and/or cycloparaffin (C₄-C₂₀) with one or several groups comprising carbonyl, acyloxy, amide, amine and halogen group; preferably M is selected from alkyl (C₁-C₁₂), cyclocalkyl (C₆-C₁₂) or their combination, or the combination of alkyl (C₁-C₁₂) and/or cyclocalkyl (C₆-C₁₂) with one or several groups like carbonyl, acyloxy, amide, amine and halogen. M shall be joined to N atom in aziridine ring described in Formula 4 by at least one C atom.
The Component B of aziridine ring-contained organic compound could be best chosen as:

| | |
|---|---|
| Bi-aziridinyl hexyl acrylate | 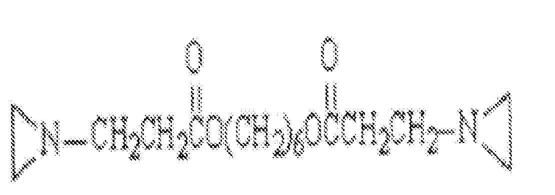 |
| Trimethylolpropane-tri-(3-2-methylaziridinylpropionate) | 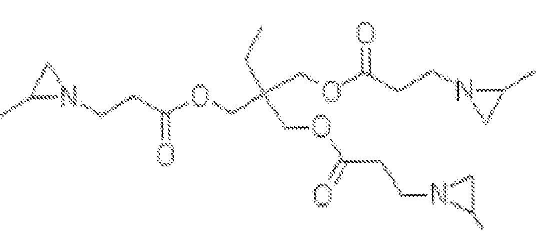 |
| Trimethylolpropane-tri-(3-aziridinylpropionate) | 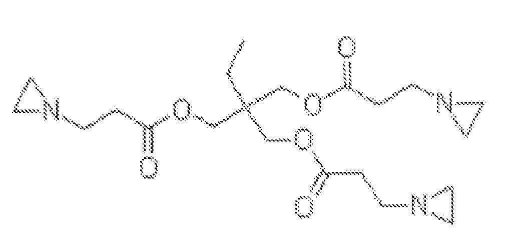 |
| Triethylolmethylpropane-tri-(3-aziridinylethyl acrylate) | 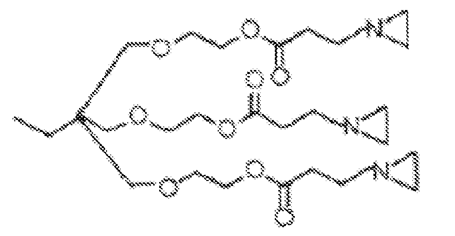 |

Preferably component B is a polymer with an aziridine ring described in Formula 5 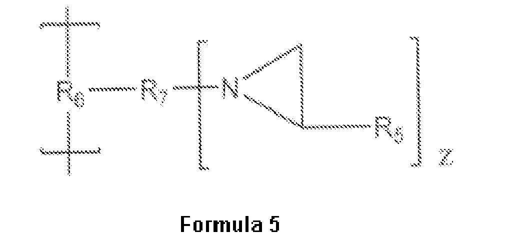 wherein R₅ is the same as mentioned above,
wherein, R₆ is a homo-polymer or irregular, alternant, block or graft copolymer, for example the degree of polymerization of such homo-polymer or copolymer is 10 to 1000 and the homo-polymer or copolymer is selected from polyalkene, polysiloxane, poly(meth)acrylate, polyurethane or polycarbonate; preferably polyalkene with degree of polymerization within 10 to 1000, polyacrylics with degree of polymerization within 10 to 1000, polymethylacrylics with degree of polymerization within 10 to 1000, polysiloxane with degree of polymerization within 10 to1000; most preferred polyacrylics with degree of polymerization with 10 to 100 or polymethylacrylics with degree of polymerization within 10 to 100; and
wherein, R₇ is not contained or linear alkylene (C₁-C₂₀), cylcoalkylene (C₃-C₂₀), arylene (C₆-C₂₀), -NH-, -CONH-, -COO- or any combination of fore-mentioned groups; preferably alkylene (C₁-C₁₂), cylcoalkylene (C₃-C₁₂), arylene (C₆-C₁₂), arylalkyl (C₇-C₂₀), -NHR'-, -CONHR'-, -R'CONH-, -COOR'-, -R'COO-, wherein R' is linear alkylene (C₁-C₂₀); most preferred linear alkylene (C₁-C₆), cylcoalkylene (C₃-C₆), arylene (C₆-C₁₀), arylalkyl (C₇-C₁₂), -NHR'-, -CONHR'-, -R'CONH-, -COOR'- or -R'COO-, wherein R' is linear alkylene (C₁-C₁₂); proviso
when R₇ is none, z could be integer of 2 to 10 and R6 shall be joined to N atom in aziridine ring described in Formula 5 via at least one C atom; or when R₇ is a group, z shall be 1, 2 or 3.

Component B of this invention is commercially available in the market or can be prepared as disclosed in the literature 'Girija S. Singh, Matthias D'hooghe and Norbert De Kimpe., Chem. Rev., 2007 (107) 2080-2135'.

In the 2- component composition used to prepare a silicone elastomer according to the invention, the molar ratio of carboxyl group in polymer A to the aziridine ring in component B shall be adjusted from 1:0.2 to 1:10; preferably 1:0.5 to 1:3; most preferred 1:0.8 to 1:1.5.

Preferably a filler can be added additionally into the composition to extend the application scope of resultant silicone elastomer and to improve the performance of such silicone elastomer. The types and amount of fillers can be selected according to routine and present technology of the detailed application fields, for instance, precipitated silica, fumed silica, nano-calcium carbonate, diatomite, micro silicon power, titanium pigment, aluminium power, nano-zinc oxide, nano-aluminium oxide, feldspat powder and others.

Additionally other chain extender in component B can be included in the composition to extend the application scope of resultant silicone elastomer and to improve the performance of a silicone elastomer according to the invention. The type and amount of a chain extender can be selected according to routine and present technology of the detailed application fields. For instance an oxazoline compound with two oxazoline ring described in Formula 6, for example 2,2'-(1,3-phyenyl) bi-2-oxazoline.

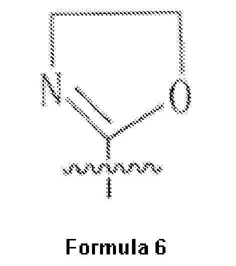

This invention also relates to a silicone elastomer which is the reaction product after the crosslinking and chain extension reaction of polymer A. This crosslinking reaction is performed by the carboxyl group in polymer A and by the aziridine ring described in Formula 3 providing a bond as described in Formula 7 and/or Formula 8. For example the molar ratio of carboxyl group in polymer A to N-atoms ( see Formula 7 and Formula 8) is chosen from 1:0.2 to 1:10; preferably from 1:0.5 to 1:3; most preferred from 1:0.8 to 1:1.5.

The composition of polymer A is the same as written above. 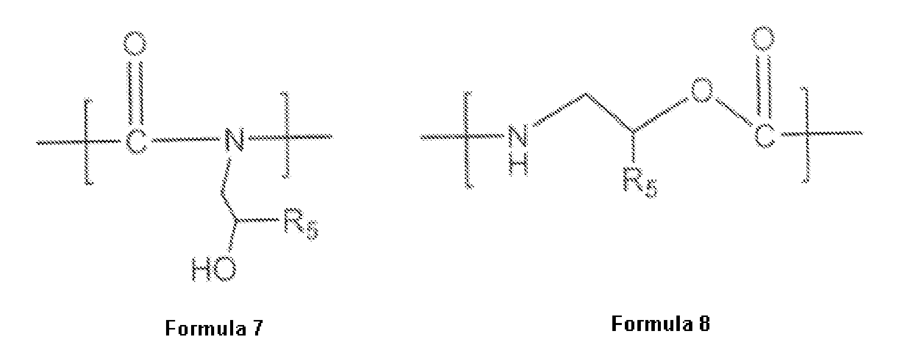 wherein, the description of R₅ is the same written above.

The structure of the silicone elastomer according to this invention is for example a three-dimensional network of crosslinked polymer or a long chain resulting from chain extension reaction of the terminal group of polymer A based on the structure described in Formula 7 and/or Formula 8.

The extension strength of a silicone elastomer of this invention can reach 0.1 to 5 MPa; the elongation at break could reach 100 to 1000%; Young's Modulus can reach 1 to 20MPa; Shore's Hardness A could reach 10 to 80. The cured composition looses 5% weight under N₂ and the temperature (Td₅ ) for this loss of weight is about 200 to 400 °C and the Thermal Decomposition Temperature is about 300 to 700 °C.

One embodiment of this invention includes the application of the silicone elastomer according to the invention in electronic, transportation and chemical engineering. In detail, it could be used to manufacture adhesives or coatings; more in detail, sealant or casting encapsulating material and others.

One embodiment of this invention is directed to a process to prepare a silicone elastomer according to the invention, with the steps as follows: mix the composition homogenously, apply it as adhesive or coating and let the mixture crosslink by chemical reaction. As a result, the silicone elastomer is obtained.

The composition of component A and component B is the same as mentioned above. The molar ratio of carboxyl group in component A to aziridine ring in component B shall be in the range of 1:0.2 to 1:10; preferably 1:0.5 to 1:3; most preferably 1:0.8 to 1:1.5. During the reaction, according to the location of carboxyl group in polymer A as well as the molar ratio of carboxyl group in polymer A to aziridine ring in component B, the silicone elastomer could be formed as crosslinked polymer with three-dimensional network or long chain polymer resulting from the chain extension reaction of polymer A.

For example the reaction temperature shall be from -35 to 150°C; preferably from 0 to 80 °C; and most preferred 20 to 40 °C.

One embodiment of the invention provides a composition with a reaction time from 1 second to 30 days; preferably from 3 seconds to 10 days. When the reaction temperature is from 20 to 30°C, a specific reaction time shall be from 0.001 to 168h; preferably 0.5 to 24h; most preferred 1 to 5 h.

In one other embodiment of the invention the filler or other chain extender of component B can be added to the composition during the manufacturing to extend the application scope of the silicone elastomer and to improve the performance of such silicone elastomer. The description how to choose filler and chain extender is the same as mentioned above.

In this invention, mixing of the components takes place in mixer or extruding machine. As mixer all common ones are used known for polymer manufacture processes, for instance, planet mixer, kneader, high speed mixer (Speed Mixer, Flack Tek Corporation).

In this invention, the molecular weight ( M_{W} and M_{N} ) and the distribution index of molecular weight ( M_{W} / M_{N} ) can be obtained via GPC (Gel Penetration Chromatography) with PS (Polystyrene) as reference.

Unless there is particular indication, all of the agents and raw materials in this invention could be bought on the market.

The advantages of this invention consist of:
(1) The preparation of the silicone elastomer overcomes the disadvantages that the known crosslinking process of organic silicones is will release VOC or needs to add heavy metal catalyst and therefore it improves the requirement of environment protection.
(2) In the preparation approach of the silicone elastomer, the crosslink or chain extension reactions take place in surface and inner at the same time with fast speed and the reaction could proceed fast and completely.
(3) The composition used to prepare the silicone elastomer has good fluidity for conveniently processing.
(4) The silicone elastomer has excellent apparent transparency, good extension strength, elasticity, insulation, resistance to both high and low temperatures, resistance to climate and water etc. Particularly, it has much better adhesive properties than a normal silicone elastomer.

### Synthesis Examples

Below synthesis examples are used to further explain this invention but shall not make restrictions.

### Explications of tests:

The Heat-Weight Analysis of samples is done on the TGA Instrument of SDTA 851^{e} (Mettler Toledo Company). Test conditions: the rate of raising temperature is 20°C/min; under N₂ atmosphere.
The Mechanical Performance Analysis of samples is done on Instron Material Test Machine-Type 5569 (Instron Corporation) and the test is based on American Standard ASTM-D412.
Shore A is measured according to ASTM D 2240.

Unless there is other indication, all of the tests are done under normal temperature (25°C) and pressure with the relative humidity of 50%.

### Example 1

Adding 120g amidepropyl endcapped polydimethylsiloxane (M_{w}=4000 g/mol, 0.03mol, from Genesee Polymers Corporation) and 5.88g maleic anhydride (0.06mol, from National Medicine Group Chemical Agent Corporation) to the container with stirrer and stirring the mixture for 30 minutes under 60°C. After the reaction finished, the carboxyl endcapped polydimethylsiloxane was obtained, i.e., Reactant A. And then, adding all of Reactant A fore-mentioned and 9.34g Reactant B trimethylolpropane-tri(3-2-methylaziridinylpropionate) (0.02mol, from Shanghai Youwei Trade Corporation) to the 300ml PP (polypropylene) Cup technically used for Speedmixer; afterward, stirring the mixture in Speedmixer Mixer (Speedmixer^{™} DAC.150FVZ, Flack Tek Corporation) with the rate of 3000rpm for 1.5 min. The mixture of Reactant A and B apparently dried within 1h under 25°C and completely solidified after 24h. The resultant outcome is a silicone elastomer. The extension strength is 0.15 MPa, Shore's Hardness A is 18.0. It lost 5% of weight under N₂ atmosphere and Td₅ is 324.7°C and its Thermal Decomposition Temperature is 535.0°C.

### Example 2

Adding 350g amidepropyl endcapped polydimethylsiloxane (M_{w}=1000 g/mol, 0.35mol, from Genesee Polymers Corporation) and 50g succinic anhydride (0.5mol, from National Medicine Group Chemical Agent Corporation) to the container with stirrer and stirring the mixture for 30 minutes under 130°C. After the reaction finished, the carboxyl endcapped polydimethylsiloxane was obtained, i.e., Reactant A. And then, adding all of Reactant A fore-mentioned and 78g Reactant B trimethylolpropane-tri(3-2-methylaziridinylpropionate) (0.17mol, from Shanghai Youwei Trade Corporation) to the 500ml PP (polypropylene) Cup specially used for Speedmixer; afterward, stirring the mixture in Speedmixer Mixer (Speedmixer^{™} DAC.150FVZ, Flack Tek Corporation) with the rate of 3000rpm for 1.5 min. The mixture of Reactant A and B apparently dried within 1h under 25°C and completely solidified after 24h. The resultant outcome is a silicone elastomer. The extension strength is 0.54MPa, the breakage extension ratio is 31.8%, Young's Modulus is 1.9MPa and Shore's Hardness A is 32.0.

## Claims

1. A composition to prepare a silicone elastomer, comprising a component A containing a polymer A as homo-polymer formed by one kind of monomer described in Formula 1, or as irregular, alternant, block or graft copolymer formed by more then one monomer as described in Formula 1, having a terminal group as described in Formula 2, 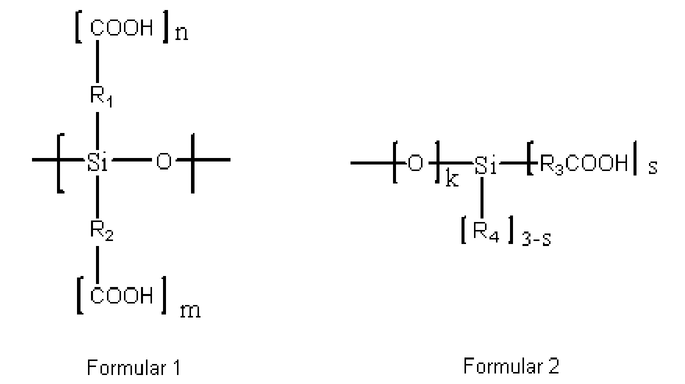 wherein n and m are 0 or 1 independently; s is 0,1,2,3 and s+m+n>=2;
wherein if the terminal group of Formula 2 is directly attached to 'Si' of Formula 1, k shall be 1;
wherein if the terminal group in Formula 2 is attached to 'O' of Formula 1, k shall be 0;
wherein if n and m equal to 1 , R₁, R₂ or R₃ could independently be linear alkylene (C₁-C₂₀), cylcoalkylene (C₃-C₂₀), arylene (C₆-C₂₀), -NH-, -CONH-, -COO- or any combination of groups mentioned above;
wherein if n and m equal to 0, R₁, R₂ or R₄ could independently be -H, alkyl (C₁-C₂₀), cycloparaffin group (C₃-C₂₀), aryl (C₆-C₂₀), (C₂-C₁₂), acyloxy or any combination of groups mentioned above; and a component B containing a compound having aziridine rings as described in Formula 3 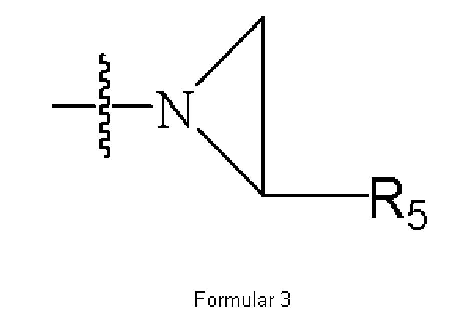 wherein, R₅ could be -H, alkyl (C₁-C₂₀), cycloparaffin group (C₃-C₂₀), aryl (C₆-C₂₀), alkene (C₂-C₁₂) or any combination of groups mentioned above; and
wherein the mixture to prepare a silicone elastomer shall have a molar ratio of carboxyl group in component A to aziridine ring of component B from 1:0.2 to 1:10.

2. The composition according to Claim 1, wherein the molar ratio of carboxyl group in polymer A to aziridine ring of component B shall be from 1:0,5 to 1:3, preferably from 1:0,8 to 1:1,5.

3. The composition according to Claim 1 or 2, wherein when n and m are equal to 1, R₁, R₂ or R₃ are independently linear alkylene (C₁-C₁₂), cycloalkylene (C₃-C₁₂), arylene (C₆-C₁₂), arylalkyl(C₇-C₂₀), -NHR'-, R'CONH-, -COOR'-, -R'COO- and wherein R' is linear alkylene (C₁-C₂₀); and
wherein when n and m are equal to 0, R₁, R₂ or R₄ are independently alkyl (C₁-C₁₂), cycloparaffin group (C₃-C₁₂), aryl (C₆-C₁₂), alkenyl (C₂-C₆), arylalkyl (C₇-C₂₀), alkylaryl (C₇-C₂₀), acyloxy (C₂-C₁₂).

4. The composition according to Claim 1 to 3, wherein R₅ is selected from alkyl (C₁-C₁₂), cycloparaffin group (C₃-C₁₂), aryl (C₆-C₁₂), alkenyl (C₂-C₆), alkylaryl (C₇-C₂₀), arylalkyl (C₇-C₂₀).

5. The composition according to Claim 1 to 4, wherein polymer A could be carboxyl propanamidepropyl endcapped polydimethylsiloxane, carboxyl propanamidepropyl endcapped polymethylphenylsiloxane, carboxyl acrylamidepropyl endcapped polydimethylsiloxane, carboxyl benzamidepropyl endcapped polydimethylsiloxane or carboxyl benzamidepropyl endcapped polymethylphenylsiloxane.

6. The composition according to Claim 1, wherein the average molecular weight (M_{w}) of polymer A could be from 500 to 200000 g/mol, preferably from 800 to 50000 g/mol.

7. The composition according to Claim 6, wherein the Distribution Index of molecular weight of polymer A is between 3 to 1.

8. The composition according to one of Claim 1 to 7, wherein the component B comprises at least one compound selected from Aziridine ring-contained compounds as described in Formula 4 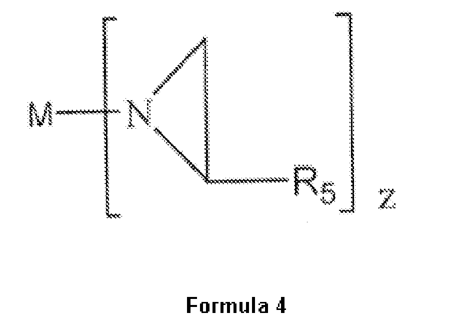 wherein z could be integer of 2 to20, and
wherein M could be a C₁-C₂₀ -alkyl, C₄-C₂₀ -cycloalkyl or their combination; or the combination of C₁-C₂₀ -alkyl and/or C₄-C₂₀ -cycloalkyl including one or several groups selected from carbonyl, acyloxy, amide or halogen; and
M shall be bond to N atom in the aziridine ring via at least one C-atom; or
as described in Formula 5 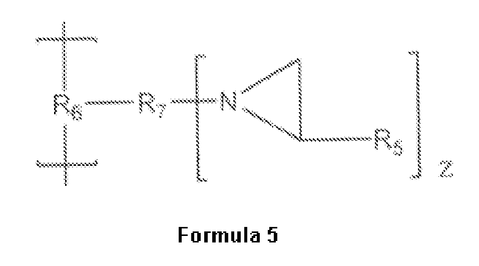 wherein R₅ is the same as above, and
wherein R₆ is a homo-polymer or irregular, alternant, block or graft copolymer and the degree of polymerization of such homo-polymer or copolymer shall be 10 to 1000; and
wherein R₇ is none or linear C₁-C₂₀-alkylene, C₃-C₂₀-cyclcoalkylene, C₆-C₂₀-arylene, -NH-, -CONH-, -COO- or a combination of the fore-mentioned groups, and
if R₇ is none, z could be integer of 2 to10 and R6 shall be joined to N atom in aziridine ring described in Formula 5 via proper C- atom; or
if R₇ is a group, z shall be 1, 2 or 3.

9. The composition according to Claim 8, wherein M is a C₁-C₁₂- alkyl group, a C₆-C₁₂-cycloalkyl group or a combination; or a C₁-C₁₂ -alkyl and/or C₆-C₁₂-cycloalkyl group containing one or several groups selected from carbonyl, acyloxy, amide, amine or halogen;
wherein the homo-polymer or copolymer shall contain polyalkene-units with a degree of polymerization within 10 to1000, polyacrylics with degree of polymerization within 10 to 1000, polymethylacrylics with degree of polymerization within 10 to 1000 or polysiloxane with degree of polymerization within 10 to 1000,
wherein R₇ could be linear C₁-C₁₂ -alkylene, C₃-C₁₂- cylcoalkylene, C₆-C₁₂ -arylene, C₇-C₂₀ - arylalkyl, -NHR'-, -CONHR'-, -R'CONH-, -COOR'- or -R'COO-, with R' a linear C₁-C₂₀ - alkylene group.

10. The composition according to Claim 9, wherein the component B shall include one kind or several kinds of molecule described below:

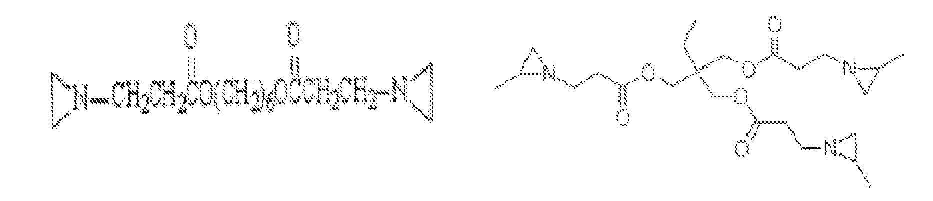

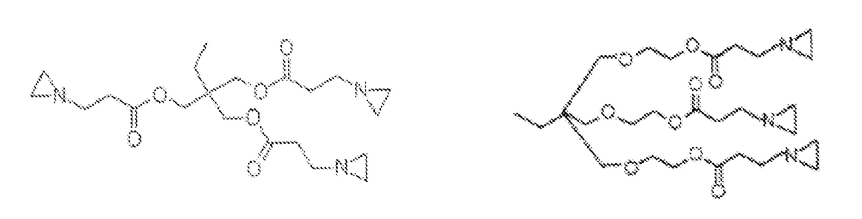

11. The composition according to Claim 1 to 10, comprising additionally a filler and/or other chain extender in component B.

12. The composition according to Claim 11, wherein the filler is selected from precipitated silica, fumed silica, nano-calcium carbonate, diatomite, micro silicon powder, titanium pigment, aluminium powder, nano-zinc oxide, nano-aluminium oxide or feldspat powder; and/or
wherein the chain extender is an oxazoline compound with oxazoline ring as described in Formula 6.

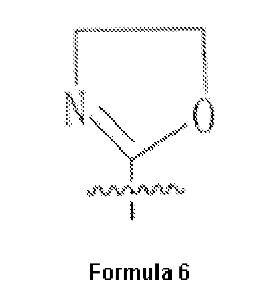

13. A silicone elastomer, which is the reaction product from crosslinking or chain extension of component A via reaction of carboxyl group in polymer A with component B containing an aziridine ring described in Formula 3 to a bond as described in Formula 7 or Formula 8 wherein the molar ratio of carboxyl group in polymer A to N-atoms is from 1:0.2 to 1:10

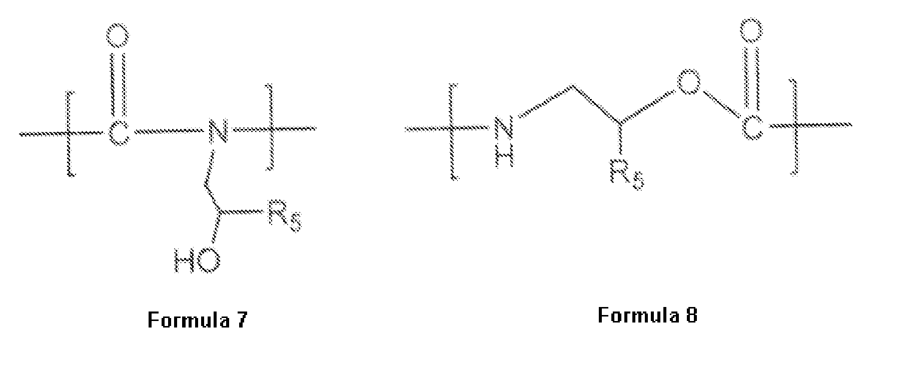

14. The use of the composition according to Claim 1 to 12 as adhesive, coating, sealant or encapsulant.

15. The process to manufacture a silicone elastomer comprising the steps
- mixing equably the composition according to any one of Claim 1 to12 and
- react the mixture at -35 to 150 °C, preferably the reaction temperature is between 0 to 80°C.
